# EUROPEAN PATENT SPECIFICATION

(11) **EP 1 841 648 B1**
(45) Date of publication and mention of the grant of the patent: **08.10.2008**
(21) Application number: 06733595.0
(22) Date of filing: 03.01.2006
(51) Int. Cl.: B64D 41/00

(54) **AUXILIARY POWER UNIT EXHAUST DUCT BELLMOUTH INCORPORATING REVOLUTE JOINTS TO FACILITATE INSTALLATION AND REMOVAL OF SAID AUXILIARY POWER UNIT**
TRICHTER FÜR DAS ABGASROHR EINES HILFSAGGREGATES MIT SCHARNIEREN ZUM VEREINFACHUNG DES EINBAUS UND DES AUSBAUS DIESES HILFSAGGREGATES
SORTIE EVASEE DE CONDUIT D'ECHAPPEMENT DE GROUPE AUXILIAIRE DE BORD INCORPORANT DES JOINTS ROTOIDES FACILITANT LE MONTAGE ET LE DEMONTAGE DE CE GROUPE

(30) Priority: 25.01.2005 US 42226
(43) Date of publication of application: 10.10.2007
(73) Proprietor: Honeywell International Inc., Morristown NJ 07960 (US)
(72) Inventor: WILLIAMS, Nicholas, A., Phoenix, Arizona 85006 (US); WOODWARD, Michael, D., Scottsdale, Arizona 85262 (US)
(74) Representative: Haley, Stephen
(86) International application number: PCT/US2006/000021
(87) International publication number: WO 2006/081037

(56) References cited:
- EP-A- 1 010 618
- US-A- 5 265 408

## Description

### BACKGROUND OF THE INVENTION

The present invention generally relates to auxiliary power unit (APU) exhaust systems and, more particularly, to exhaust duct bellmouths.

APU exhaust system are known for example from EP-1010618, which constitutes the closest prior art.

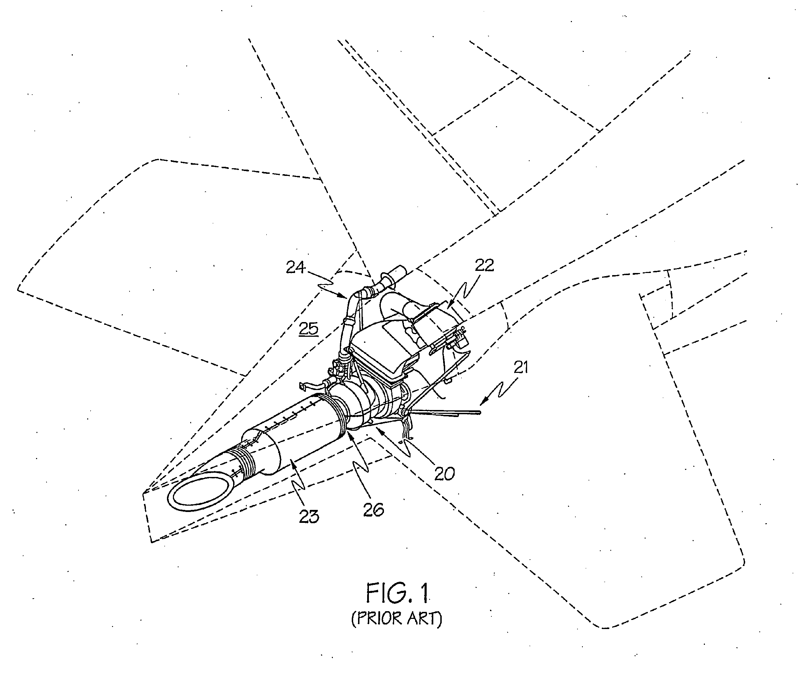

Many modem aircraft are equipped with an airborne APU that provides electrical and pneumatic power to various parts of the aircraft for such tasks as environmental control, lighting, powering electronics, main engine starting, etc. Figure 1 shows an APU 20 installed in the tailcone of an aircraft 25. In order to utilize the APU 20, various installation systems must be included with the APU 20. Some of the principal systems may include a mount system 21, an inlet system 22, an exhaust system 23, and a pneumatic system 24.

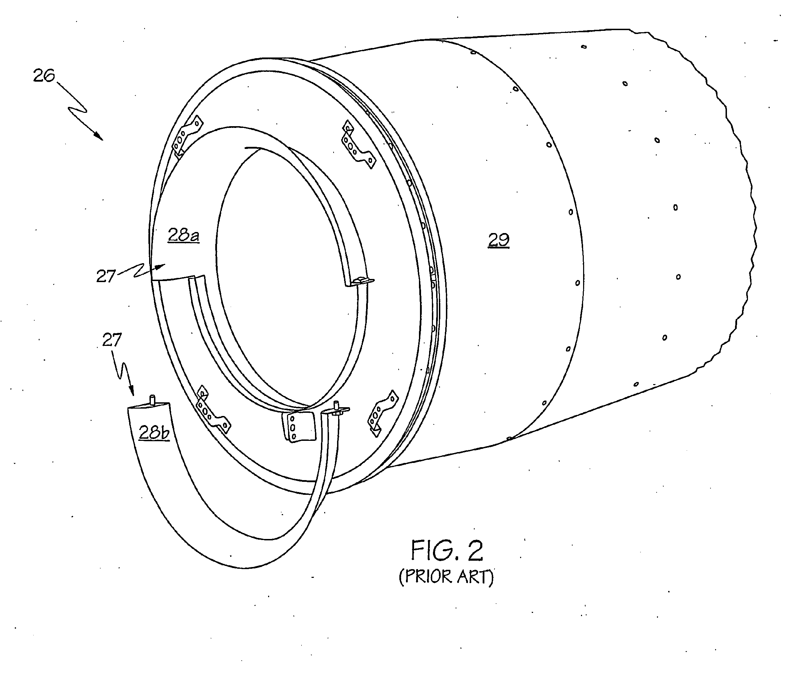

The exhaust system 23 for the APU 20 performs many functions, including evacuating APU exhaust gas from the aircraft 25, attenuating exhaust noises, and providing cooling airflow for the aircraft's APU compartment when used in conjunction with an eductor system 26. The three primary components of the eductor system 26, depicted in Figure 2, may include an APU primary pipe (not shown), sometimes referred to as a mixing nozzle, an exhaust duct secondary pipe 29, which is of a larger diameter than the primary pipe and often installed coaxially thereto, and a traditional bellmouth 27, which aids in the entrainment of air into the exhaust duct secondary pipe 29 by utilizing the motive energy of the flow from the primary pipe.

The traditional bellmouth 27 is a sheet metal nozzle often of a two piece construction that facilitates the installation and removal of the APU 20 from the aircraft 25. The traditional bellmouth 27 may comprise a fixed portion 28a and a removable portion 28b. The fixed portion 28a may be connected to the forward end of the exhaust duct secondary pipe 29. The removable portion 28b may be connected to the fixed portion 28a during engine operation and removed during installation/removal of the upstream APU and mixing nozzle. Because of its lightweight design, as necessitated by stringent weight limitations imposed by the aircraft manufacturer, the removable portion 28b of the traditional bellmouth 27 is often the subject of damage or loss when it is not installed.

As can be seen, there is a need for a bellmouth that does not comprise a removable portion. Also needed, is an improved method of facilitating APU installation and removal.

In one aspect of the present invention, there is provided a duct bellmouth for an exhaust system of an Auxiliary Power Unit of an aircraft comprising:
a fixed member having a cylindrical portion, a toroidal portion, a first end, and a second end;
a first movable member comprising a formed section complementary to the toroidal portion of the fixed member positioned between said first end and said second end; and
a first revolute joint interface positioned between and in contact with said first end and said first movable member, said interface providing a hinged connection between said fixed member and said first movable member.

Figure 1 is an isometric view of a prior art APU installation in the tailcone of an aircraft;

Figure 2 is an isometric view of a prior art bellmouth;

Figure 3a is an isometric view of a hinging bellmouth in a closed position according to one embodiment of the present invention;

Figure 3b is an isometric view of the hinging bellmouth of Figure 3a in an open position;

Figure 4a is an isometric view of a fixed member according to one embodiment of the present invention;

Figure 4b is a side view of the fixed member of Figure 4a;

Figure 4c is a plan view of the forward end of the fixed member of Figure 4a;

Figure 4d is a view along line 4d in Figure 4c;

Figure 5a is an isometric view of a revolute joint tab according to one embodiment of the present invention;

Figure 5b is an isometric view of a fastener tab according to one embodiment of the present invention;

Figure 6a is an isometric view of a motive member according to one embodiment of the present invention;

Figure 6b is a side view of the motive member of Figure 6a;

Figure 6c is a plan view of the forward end of the motive member of Figure 6a;

Figure 6d is a view along line 6d in Figure 6c;

Figure 6e is a cross-sectional close-up view of the joggle of the motive member of Figure 6a;

Figure 7 is an isometric view of a revolute joint interface according to one embodiment of the present invention;

Figure 8 is an isometric view of a fastener interface according to one embodiment of the present invention;

Figure 9 is an isometric view of a hinging bellmouth in a partially closed position according to another embodiment of the present invention;

Figure 10 is an isometric view of a hinging bellmouth according to an embodiment of the present invention installed on an exhaust duct; and

Figure 11 is a flow chart of a method of facilitating APU installation and removal according to an embodiment of the present invention.

### DETAILED DESCRIPTION OF THE INVENTION

The following detailed description is of the best currently contemplated modes of carrying out the invention. The description is not to be taken in a limiting sense, but is made merely for the purpose of illustrating the general principles of the invention, since the scope of the invention is best defined by the appended claims.

Broadly, the present invention provides hinging bellmouths for gas turbine engine exhaust systems and methods for producing the same. The hinging bellmouths according to the present invention may find beneficial use in many industries including aerospace, automotive, and electricity generation. The present invention may be beneficial in applications including manufacturing and repair of aerospace components. This invention may be useful in any gas turbine engine exhaust system application.

In one embodiment, the present invention provides a hinging bellmouth for an APU exhaust duct. The hinging bellmouth may comprise a fixed nozzle portion, a motive nozzle portion of substantially the same geometry, a revolute joint interface comprising at least two hinge barrels with their necessary support structure and hinge pin, and a fastener interface. Unlike the prior art removable portion, the motive nozzle portion may remain in contact with the fixed nozzle portion during APU installation/removal. The hinging bellmouth of the present invention provides APU installation and removal accommodation without the need for a removable portion, thereby reducing damage and/or loss to components of the exhaust duct that would make it inoperable.

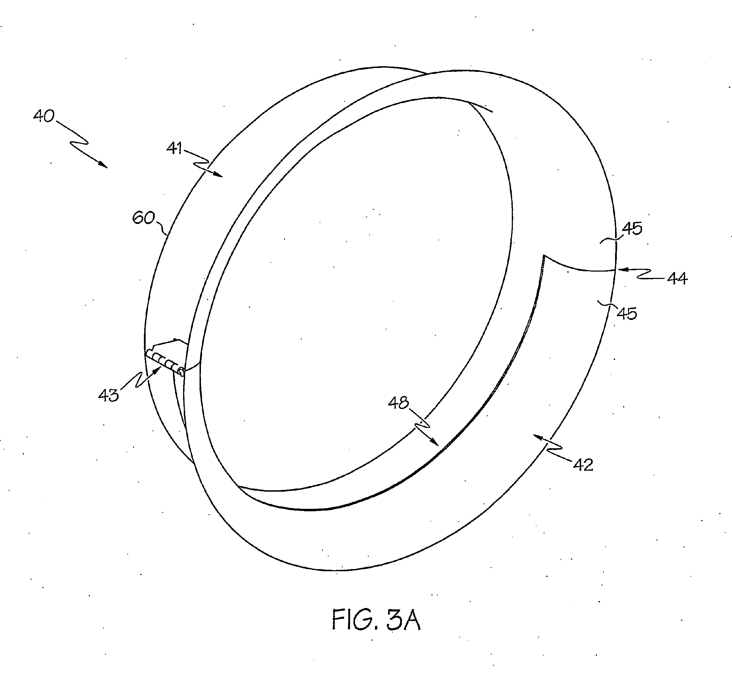

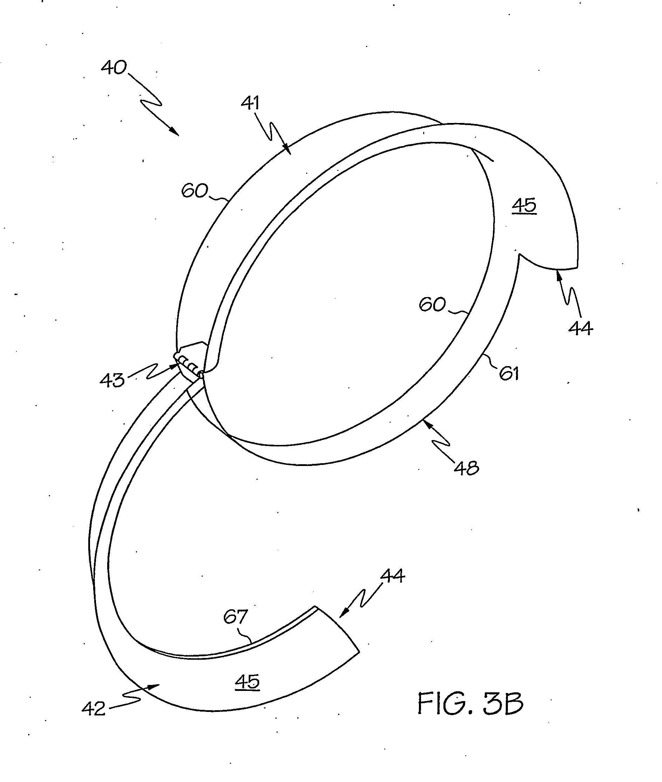

A hinging bellmouth 40 according to an embodiment of the present invention is shown in Figures 3a and 3b. The hinging bellmouth 40 may comprise a fixed member 41, a motive member 42, a revolute joint interface 43 and a fastener interface 44. The hinging bellmouth 40 may provide a flow surface 45 for an eductor system (not shown). The flow surface 45 may comprise the inner diameter surfaces of the hinging bellmouth 40.

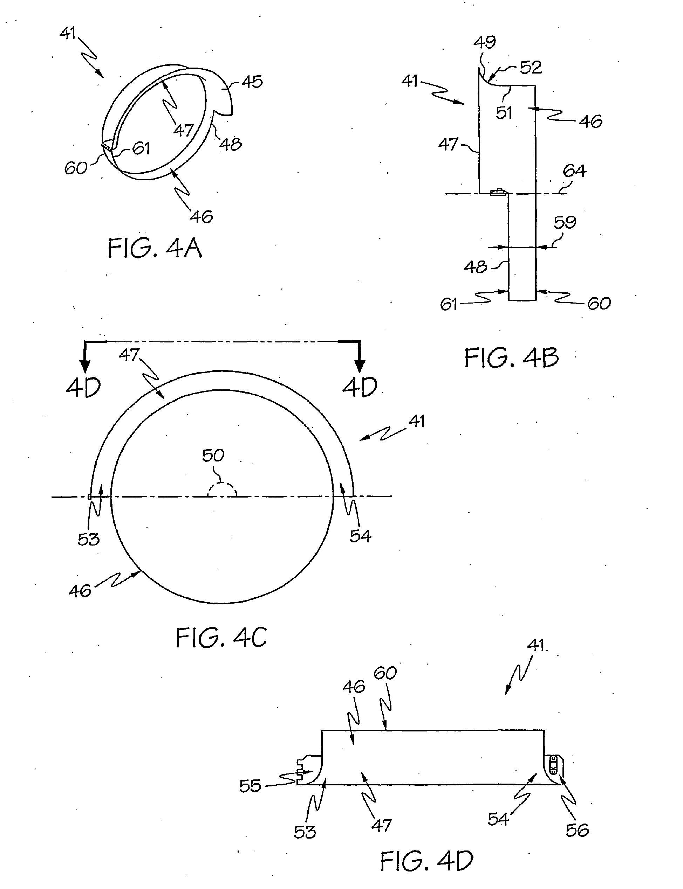

The fixed member 41 may comprise a sheet metal nozzle, as depicted in Figures 4a-4d. In lieu of sheet metal, the fixed member 41 may comprise a plastic, a fiber reinforced plastic, or a machined metal. The fixed member 41 may comprise a cylindrical portion 46 and a toroidal portion 47. The cylindrical portion 46 may comprise a straight section of cylindrical material, coaxial with a sweep axis 64 of the toroidal portion 47, and continued on from a tangency point 51 of the toroidal portion 47, as depicted in Figure 4b. A length 59 of the cylindrical portion 46 may vary with application. For some applications, the length 59 of the cylindrical portion 46 may be approximately equivalent to a toroidal radius 52. For some applications, the toroidal portion 47 may comprise a formed section of sheet metal having a one-quarter toroidal surface 49 swept through an angle 50 (depicted in Figure 4c) of about 180°. For some applications, the angle 50 may be less than about 300°. For some applications, the angle 50 may be between about 60° and about 300°.

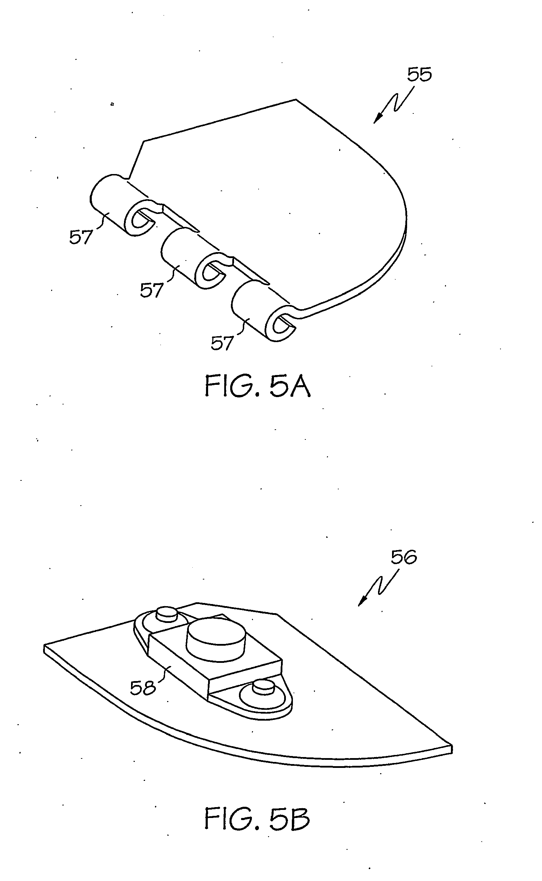

The toroidal portion 47 may comprise a first end 53 and a second end 54, as depicted in Figure 4d. A revolute joint tab 55 may be connected to the first end 53 and a fastener tab 56 may be connected to the second end 54. The revolute joint tab 55 and the fastener tab 56 may each comprise a small tab that matches the outside contour of the toroidal portion 47. The revolute joint tab 55 may support the revolute joint interface 43 and the fastener tab 56 may support the fastener interface 44. The revolute joint tab 55, an example of which is shown in Figure 5a, may comprise at least one hinge barrel 57. The hinge barrel 57 may be either integrally formed with or secondarily attached to the revolute joint tab 55. The fastener tab 56, shown in Figure 5b, may be a mirror image of the revolute joint tab 55 except that instead of being equipped with hinge barrels 57 it may be equipped with one or more nutplates 58.

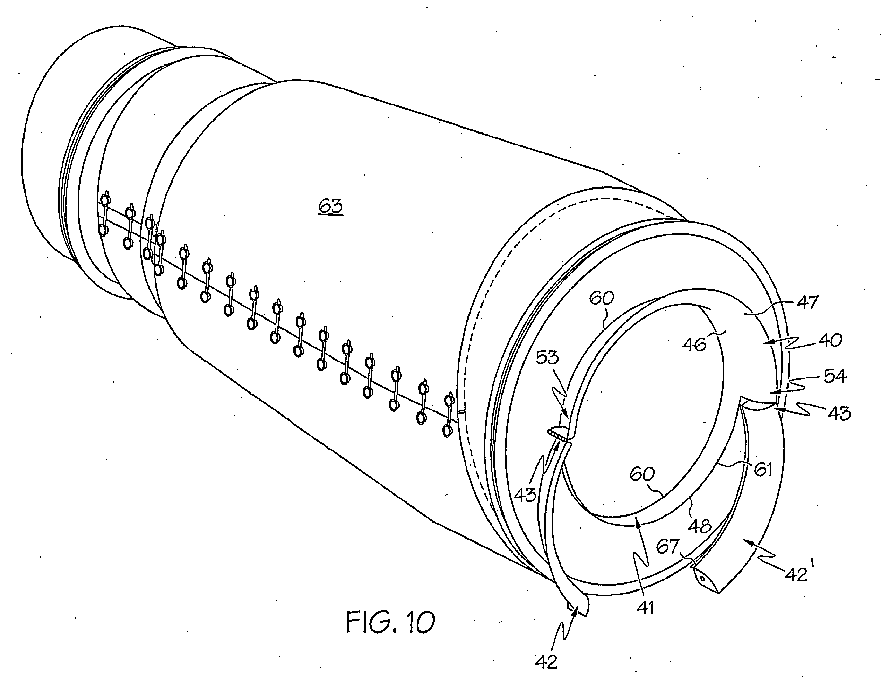

The cylindrical portion 46 of the fixed member 41 may have an aft end 60 and a forward end 61, as depicted in Figures 4a and 4b. The aft end 60 may be capable of being connected to an exhaust duct 63, as shown in Figure 10. The forward end 61, in addition to supporting the toroidal portion 47, may provide a seating edge 48 for the motive member 42.

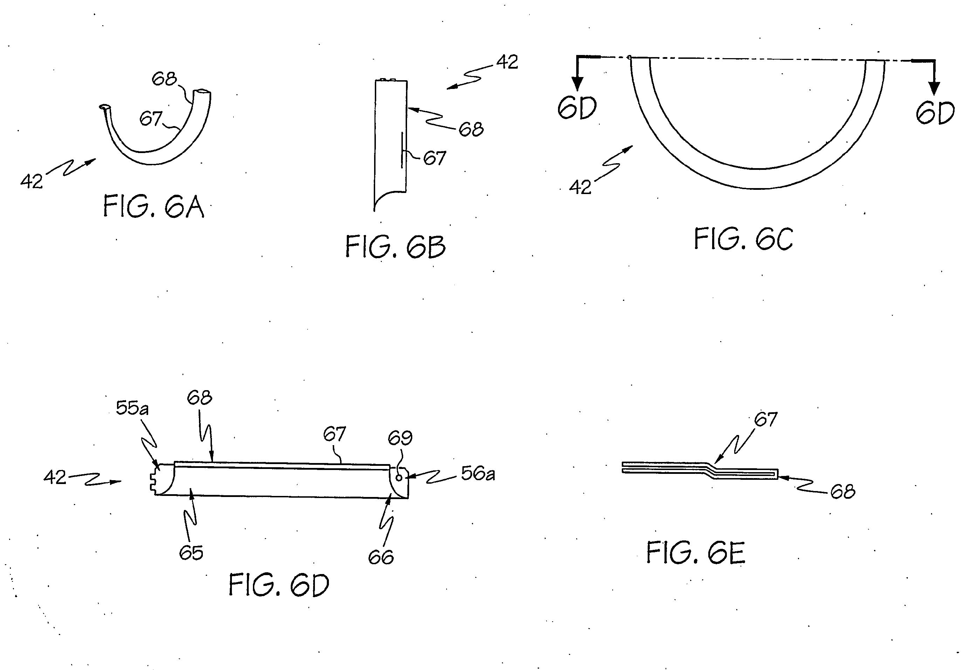

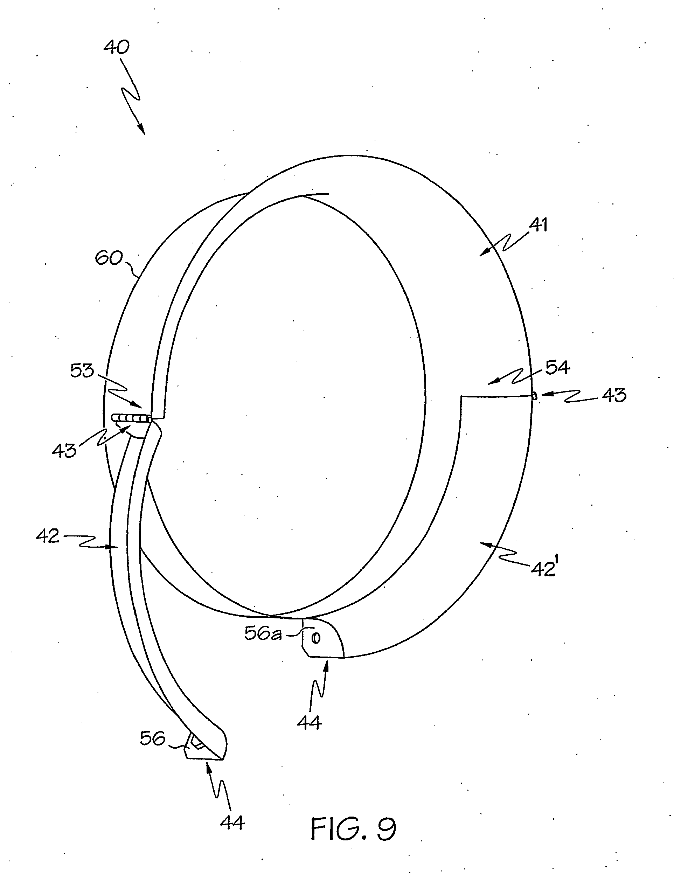

The motive member 42 may comprise a formed section of sheet metal, as depicted in Figures 6a-6e. In lieu of sheet metal, the motive member 42 may comprise a plastic, a fiber reinforced plastic, or a machined metal. For some applications, the motive member 42 may comprise a formed section of sheet metal complementary to the toroidal portion 47 of the fixed member 41. For example, when the toroidal portion 47 comprises a one-quarter toroidal surface swept through about 180°, the motive member 42 may comprise a one-quarter toroidal surface swept through about 180°. As another example, when the hinging bellmouth 40 comprises two motive members 42, as depicted in Figures 9 and 10, each motive member 42 may be swept through about 90°. The motive member 42 may incorporate a joggle 67 into an aft edge 68 that compliments the seating edge 48 of the fixed member 41. The joggle 67 may minimize steps and gaps between the fixed member 41 and the motive member 42 such that the flow surface 45 may be smooth and aerodynamic.

The motive member 42 may comprise a revolute joint end 65 and a fastener end 66. Another revolute joint tab 55a may be connected to the revolute joint end 65 and another fastener tab 56a may be connected to the fastener end 66. The revolute joint tab 55a and the fastener tab 56a may each comprise a small tab that matches the outside contour of the motive member 42. The revolute joint tab 55a of the motive member 42 may be symmetric to the revolute joint tab 55 of the fixed member 41 except that the hinge barrels 57 may be offset from, and possibly of a different quantity than, the hinge barrels 57 of the revolute joint tab 55 of the fixed member 41. This may assure proper mating between the fixed member 41 and the motive member 42 revolute joint tabs 55 and 55a. The fastener tab 56a of the motive member 42 may be symmetric to the fastener tab 56 of the fixed member 41 except that, in lieu of the nutplates 58, there may be at least one through hole 69 (depicted in Figure 6d).

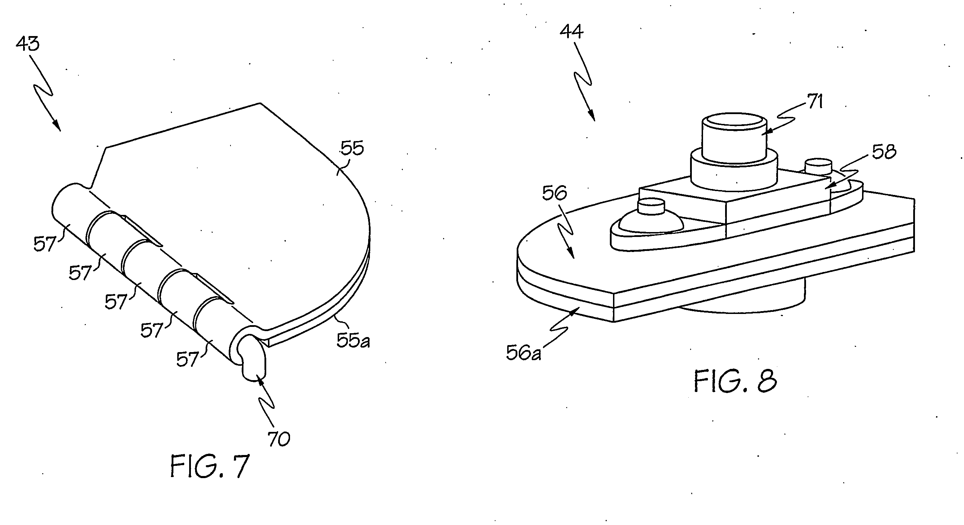

The motive member 42 may be operationally connected to the fixed member 41 by the revolute joint interface 43. An embodiment of the revolute joint interface 43 is depicted in Figure 7. In this figure the fixed member 41 and the motive member 42 have been omitted for clarity. The revolute joint interface 43 may comprise two revolute joint tabs 55, 55a, one from the fixed member 41 and one from the motive member 42, and a hinge pin 70. The hinge barrels 57 may be arranged in a concentric manner. The hinge pin 70 may match the inside diameter of the hinge barrels 57 and may be inserted therein.

The fastener interface 44 may allow the motive member 42 to be maintained in a closed position during engine operation. An embodiment of the fastener interface 44 is depicted in Figure 8. In this figure the fixed member 41 and the motive member 42 have been omitted for clarity. The fastener interface 44 may comprise two fastener tabs 56, 56a, one from the fixed member 41 and one from the motive member 42, and a threaded fastener 71, such as a screw or a bolt. The nutplate 58 and the through hole 69 (see Figure 6d) may be arranged in a concentric manner and the threaded fastener 71 may be installed therein.

Variations to the hinging bellmouth 40 described above may be useful for some applications. For example, the hinging bellmouth 40 may comprise two motive members 42 and two revolute joint interfaces 43, as depicted in Figures 9 and 10. In this example, one motive member 42 and one revolute joint interface 43 may be positioned at the first end 53 of the fixed member 41 and one motive member 42 and one revolute joint interface 43 may be positioned at the second end 54 of the fixed member 41. As can be seen, the fastener interface 44 may exist between the two motive members 42. Alternatively, two fastener interfaces 44 may exist, one between each of the motive members 42 and a receiver (not shown) mounted to the exhaust duct 63. Each motive member 42 may comprise approximately ¼ of the circumference of the hinging bellmouth 40, and the fixed member 41 may comprise approximately ½ of the circumference at the forward end of the hinging bellmouth 40. In Figure 9, the hinging bellmouth 40 is shown with one motive member 42 in an open position and one motive member 42 in a closed position. In Figure 10, both motive members 42 are depicted in an open position.

In another example (not shown), the hinging bellmouth 40 may comprise more than two motive members 42. In this example, there may be one revolute joint interface 43 at the first end 53 of the fixed member 41, one revolute joint interface 43 at the second end 54, and one revolute joint interface 43 between two adjacent motive members 42. One fastener interface may exist between one motive member 42 and one fixed member 41, between two adjacent motive members 42, or between one motive member 42 and one receiver on the exhaust duct 63.

Other variations to the described hinging bellmouth 40 may include omitting the nutplates 58 used in the fastener interface 44 and utilizing nuts and washers (not shown) in their place. Other variations may include utilizing pins, ¼ turn fasteners (Dzus^{™} fasteners), latches, clips, or other similar means in lieu of the threaded fasteners 71. Another useful variation may comprise utilizing a flexible material (not shown) in place of the hinge barrels 57 and hinge pin 70 to form an equivalent hinging interface. For example, the flexible material may comprise strips of nylon webbing or woven graphite fabric. Further, for additional stability, threaded fasteners may be incorporated in the revolute joint tabs 55,55a, for some applications.

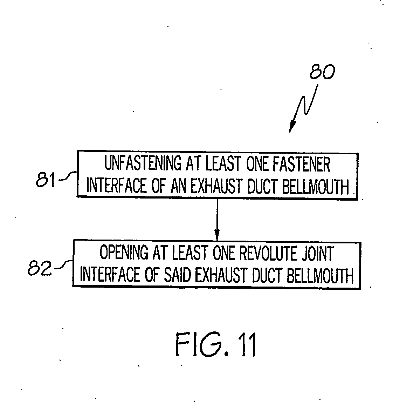

A method (not claimed) 80 of facilitating APU installation and removal is depicted in Figure 11. The method 80 may comprise a step 81 of unfastening at least one fastener interface and a step 82 of opening at least one revolute joint interface. The step 81 of unfastening may vary and may depend on the components of the fastener interface 44. For example, when the fastener interface 44 comprises a nutplate 58 and a threaded fastener 71, the step 81 of unfastening may comprise unthreading the threaded fastener 71. The step 82 of opening the revolute joint interface 43 may comprise manually moving the adjacent motive member 42 such that the hinging bellmouth 40 is in an open position.

As can be appreciated by those skilled in the art, the present invention provides improved bellmouths for exhaust systems. The hinging bellmouths of the present invention can provide a reduction in loss or damage to system components and a reduction in the associated aircraft downtime while replacement parts are ordered.

It should be understood, of course, that the foregoing relates to exemplary embodiments of the invention and that modifications may be made without departing from the scope of the invention as set forth in the following claims.

## Claims

1. A duct bellmouth for an exhaust system of an Auxiliary Power Unit of an aircraft comprising:
a fixed member (41) having a cylindrical portion (46), a toroidal portion (47), a first end (53), nd a second end (54);
a first motive member (42) comprising a formed section complementary to the toroidal portion (47) of the fixed member (41) positioned between said first end (53) and said second end (54); and
a first revolute joint interface (43) positioned between and in contact with said first end (53) and said first motive member (42), said interface providing a hinged connection between said fixed member (41) and said first movable member (42).

2. The duct bellmouth of claim 1, further comprising a fastener interface (44) between and in contact with said second end (54) and said first motive member (42).

3. The duct bellmouth of any one or more of claims 1-2, wherein said first revolute joint interface (43) comprises two revolute joint tabs (55).

4. The duct bellmouth of claim 3, wherein each revolute joint tab (55) has at least one hinge barrel (57).

5. The duct bellmouth of any one or more of claims 1-4, wherein said first revolute joint interface (43) comprises a flexible material.

6. The duct bellmouth of any one or more of claims 1-5, further comprising a second motive member (42) positioned between said first motive member (42) and said second end (54).

7. The duct bellmouth of claim 6, further comprising a second revolute joint interface (43) positioned between and in contact with said second end (54) and said second motive member (42).

8. The duct bellmouth of any one or more of claims 1-7, wherein said first motive member (42) has a joggle (67).

9. The duct bellmouth of any one or more of claims 1-8, wherein said first motive member (42) comprises a formed section of sheet metal having a one-quarter toroidal surface (49).

10. The duct bellmouth of claim 9, wherein said one-quarter toroidal surface (49) is swept through an angle (50) of between about 60° and about 300°.

## Patentansprüche

1. Rohrtrichter für ein Abgassystem eines Hilfsaggregats eines Luftfahrzeugs, mit Folgendem:
einem festgelegten Glied (41) mit einem zylindrischen Teil (46), einem Toroidteil (47), einem ersten Ende (53) und einem zweiten Ende (54) ;
einem ersten Bewegungsglied (42), das einen geformten Abschnitt umfasst, der zu dem Toroidteil (47) des festgelegten Glieds (41), der zwischen dem ersten Ende (53) und dem zweiten Ende (54) positioniert ist, komplementär ist; und
einer ersten Drehgelenkgrenzfläche (43), die zwischen dem ersten Ende (53) und dem ersten Bewegungsglied (42) positioniert ist und damit in Kontakt steht, wobei die Grenzfläche eine Scharnierverbindung zwischen dem festgelegten Glied (41) und dem ersten beweglichen Glied (42) bereitstellt.

2. Rohrtrichter nach Anspruch 1, weiterhin mit einer Befestigungsgrenzfläche (44), die sich zwischen dem zweiten Ende (54) und dem ersten Bewegungsglied (42) befindet und mit ihnen in Kontakt steht.

3. Rohrtrichter nach einem oder mehreren der Ansprüche 1 - 2, wobei die erste Drehgelenkgrenzfläche (43) zwei Drehgelenklappen (55) umfasst.

4. Rohrtrichter nach Anspruch 3, wobei jeder Drehgelenklappen (55) mindestens eine Scharnierklammer (57) aufweist.

5. Rohrtrichter nach einem oder mehreren der Ansprüche 1 - 4, wobei die erste Drehgelenkgrenzfläche (43) ein flexibles Material umfasst.

6. Rohrtrichter nach einem oder mehreren der Ansprüche 1 - 5, weiterhin mit einem zweiten Bewegungsglied (42), das zwischen dem ersten Bewegungsglied (42) und dem zweiten Ende (54) positioniert ist.

7. Rohrtrichter nach Anspruch 6, weiterhin mit einer zweiten Drehgelenkgrenzfläche (43), die zwischen dem zweiten Ende (54) und dem zweiten Bewegungsglied (42) positioniert ist und mit ihnen in Kontakt steht.

8. Rohrtrichter nach einem oder mehreren der Ansprüche 1 - 7, wobei das erste Bewegungsglied (42) einen Versatz (67) aufweist.

9. Rohrtrichter nach einem oder mehreren der Ansprüche 1 - 8, wobei das erste Bewegungsglied (42) einen geformten Abschnitt aus Blech umfasst, das eine Einviertel-Toroidfläche (49) aufweist.

10. Rohrtrichter nach Anspruch 9, wobei die Einviertel-Toroidfläche (49) über einen Winkel (50) zwischen ca. 60° und ca. 300° geschwenkt wird.

## Revendications

1. Sortie évasée de conduit d'un système d'échappement d'un groupe auxiliaire de bord d'un aéronef, comprenant :
un organe fixe (41) ayant une portion cylindrique (46), une portion toroïdale (47), une première extrémité (53) et une deuxième extrémité (54) ;
un premier organe moteur (42) comprenant une section façonnée complémentaire de la portion toroïdale (47) de l'organe fixe (41), positionnée entre ladite première extrémité (53) et ladite deuxième extrémité (54) ; et
une première interface de joint rotoïde (43) positionnée entre et en contact avec ladite première extrémité (53) et ledit premier organe moteur (42), ladite interface assurant une connexion à charnière entre ledit organe fixe (41) et ledit premier organe moteur (42).

2. Sortie évasée de conduit selon la revendication 1, comprenant en outre une interface d'attache (44) entre et en contact avec ladite deuxième extrémité (54) et ledit premier organe moteur (42).

3. Sortie évasée de conduit selon l'une quelconque ou plusieurs des revendications 1 à 2, dans laquelle ladite première interface de joint rotoïde (43) comprend deux pattes de joint rotoïde (55).

4. Sortie évasée de conduit selon la revendication 3, dans laquelle chaque patte de joint rotoïde (55) a au moins un corps de charnière (57).

5. Sortie évasée de conduit selon l'une quelconque ou plusieurs des revendications 1 à 4, dans laquelle ladite première interface de joint rotoïde (43) comprend un matériau flexible.

6. Sortie évasée de conduit selon l'une quelconque ou plusieurs des revendications 1 à 5, comprenant en outre un deuxième organe moteur (42'), positionné entre ledit premier organe moteur (42) et ladite deuxième extrémité (54).

7. Sortie évasée de conduit selon la revendication 6, comprenant en outre une deuxième interface de joint rotoïde (43) positionnée entre et en contact avec ladite deuxième extrémité (54) et ledit deuxième organe moteur (42).

8. Sortie évasée de conduit selon l'une quelconque ou plusieurs des revendications 1 à 7, dans laquelle ledit premier organe moteur (42) a une partie intermédiaire (67).

9. Sortie évasée de conduit selon l'une quelconque ou plusieurs des revendications 1 à 8, dans laquelle ledit premier organe moteur (42) comprend une section façonnée en tôle métallique ayant une surface en forme de quart de toroïde (49).

10. Sortie évasée de conduit selon la revendication 9, dans laquelle ladite surface en forme de quart de toroïde (49) est balayée sur un angle (50) compris entre environ 60° et environ 300°.
